# EUROPEAN PATENT SPECIFICATION

(11) **EP 0 795 861 B1**
(45) Date of publication and mention of the grant of the patent: **25.09.2002**
(21) Application number: 97301478.0
(22) Date of filing: 05.03.1997
(51) Int. Cl.: G11B 20/12, G11B 27/30, G11B 27/32

(54) **User-defined data in an unused region of data storage media**
Benutzer-definierte Daten in einem unbenutzten Bereich von Datenspeichermedien
Données définies par l'utilisation dans une région inutilisée de supports de stockage de données

(30) Priority: 12.03.1996 US 614032
(43) Date of publication of application: 17.09.1997
(73) Proprietor: International Business Machines Corporation, Armonk, N.Y. 10504 (US)
(72) Inventor: Fry, Scott Milton, Tucson, Arizona 85741 (US); Johnson, Steven Douglas, Tucson, Arizona 85730 (US); Wilson, Steven Bennett, Tucson, Arizona 85749 (US)
(74) Representative: Moss, Robert Douglas

(56) References cited:
- EP-A- 0 558 169
- US-A- 4 979 159
- US-A- 5 132 807
- PATENT ABSTRACTS OF JAPAN vol. 013, no. 138 (P-852), 6 April 1989 & JP 63 304465 A (MATSUSHITA ELECTRIC IND CO LTD), 12 December 1988

## Description

### FIELD OF THE INVENTION

The present invention relates generally to storage media and, more particularly, to recording of user-defined data on storage media.

### BACKGROUND OF THE INVENTION

Computer tape storage devices record user data on lengths of recordable tape to thereby provide convenient, relatively economical storage of data. The tape generally consists of a length of substrate on which is deposited a coating that provides a recording media. The recordable magnetic tape is advanced past magnetic heads that record flux transitions, which represent data. Some tape storage devices record data with rotating heads in a helical scan pattern, across the width of the tape, but the vast majority of tape storage devices record data along the length of the tape; in a linear fashion, as the tape is moved past stationary heads.

A linear length of recording media, such as a magnetic tape, is generally referred to as a volume. A reserved region at the physical beginning of the tape (BOT) is recorded with data format information and identification data that permits a tape storage device to determine the nature of the user data that is to follow on the remainder of the tape. This reserved region is generally referred to as a volume control region (VCR). The VCR contains approximately ten megabytes (10 MB) of uncompacted data and occupies a relatively small length. For example, in a 300-meter length of magnetic tape, the VCR typically occupies no more than two meters.

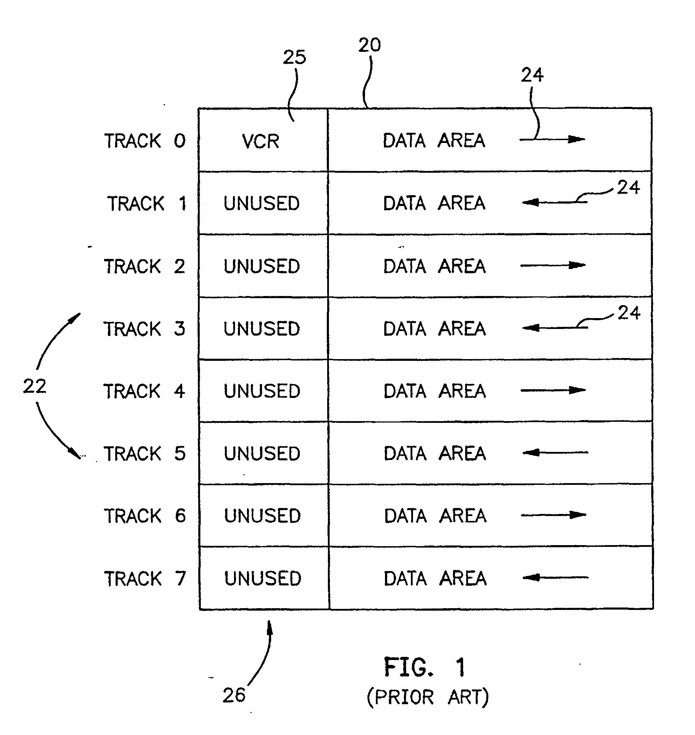

Some linear tape storage devices divide the tape into fixed-sized recording areas called partitions and arrange the partitions into parallel tracks on the tape in a "serpentine" fashion. That is, a single partition storing user data may take up less than the entire width of the tape. A serpentine tape storage pattern records data in a path that follows a first data track spanning the entire length of the tape in one direction, returns in the opposite tape direction in an adjacent parallel track, and then continues sweeping back and forth along the length of the tape in parallel tracks. Figure 1 illustrates a portion of magnetic tape 20 with user data stored in a serpentine pattern. User data is stored in data partitions distributed within eight parallel, linear tracks 22 along the length of the tape. The data partitions are indicated by the legend "data area" and the direction of serpentine recording is indicated by the arrows 24. The VCR area 25 occupies the physical beginning of the tape in the first track, and therefore defines an unused area 26 at the end of each parallel partition track located at the physical beginning of the tape.

The serpentine path defines a single storage path having a data area or logical length that might be many times the physical length of the tape. Therefore, the logical middle of the tape storage path might be located at the physical beginning of the tape. In this way, serpentine recording advantageously provides independently addressable storage regions, reduces the access time for mid-tape partitions, and increases the total amount of data that can be stored on a tape.

Such tape storage devices include a device controller that manages the partitioning so that data storage and retrieval into the partitions is transparent to a host computer, with which the storage device exchanges data. Thus, the host computer sends and receives data from the storage device, but has no involvement with the recording of that data on the storage media. If a user data block in a partition is updated and the new data values extend past the partition in which the prior values were stored, the device controller can stop the recording at the end of the partition and resume recording in a partition at another tape location. In this way, update-in-place data operations can be accommodated.

Users would like an area of tape in which they can record data of their own choosing, outside of the data partitions. Users would be free to organize the contents of such a supplemental storage area in a meaningful manner as they see fit and to maintain the contents. Users could define a data record for containing such information and keep the record within one of the partitions, but doing so would require an application level programming change and would effectively eliminate equal-sized partitions on the tape.

Users would like access to a supplemental storage area without having to define the nature of the storage area themselves. That is, users would like storage and retrieval from the supplemental storage area to be transparent to their data operations. Providing such a user-accessible storage area can be problematic, especially where equal-size partitions are desired. Users typically prefer partitioning in which the partitions are all of the same size. If an area from the first partition is taken to provide the storage area, then the partitions cannot be the same size. If an entire partition track is used for the storage area, then the remaining partitions will be the same size, but a large portion of the data recording area on the tape is wasted.

From the discussion above, it should be apparent that there is a need for a serpentine-recorded storage tape with a user-accessible storage area that does not waste recording area and permits equal-sized partitions. The present invention satisfies this need.

### DISCLOSURE OF THE INVENTION

In accordance with the present invention, a storage device controller records user data in a plurality of equal-sized partitions in parallel linear tracks and records tape format information in a protected region at one end of a track, thereby defining an unused area across all the remaining storage media tracks in which user data is not recorded. This provides a user accessible supplemental storage area by storing user data in one or more of the unused areas. In this way, the partitions are fully utilized for user data so that no recording area is wasted and the partitions remain equal-sized.

According to one aspect the invention provides a method of recording user-defined data on a storage media having a plurality of parallel tracks comprising multiple data partitions in which user data is recorded and media format information in an initial parallel track wherein the media format information is protected from user access, characterised in that the method comprises the steps of: receiving user-defined data for storage on the storage media outside of the data partitions; and recording the user-defined data in one or more supplemental storage areas of one or more subsequent parallel tracks, the supplemental storage areas being defined by the media format information of the initial parallel track.

According to a second aspect, the invention provides a storage device controller that records user data in a plurality of parallel tracks of a storage media having multiple data partitions in which user data is stored, and that stores media format information in an initial parallel track of the storage media such that the media format information is protected from user access, characterised in that the storage device controller comprises: means for receiving user-defined data for storage on the storage media outside of the data partitions; and means for recording the user-defined data in one or more supplemental storage areas of one or more subsequent parallel tracks of the storage media, the supplemental storage areas being defined by the media format information of the initial parallel track.

### BRIEF DESCRIPTION OF THE DRAWINGS

The invention will now be described, by way of example only, with reference to the drawings, in which:
Figure 1 is a representation of a prior art tape recording storage media having serpentine data tracks;
Figure 2 is a view of a recording media tape cartridge constructed in accordance with the present invention;
Figure 3 is a representation of a portion of the recording media contained in the tape cartridge illustrated in Figure 2;
Figure 4 is a view of a recording subsystem that utilizes the tape cartridge illustrated in Figure 2;
Figure 5 is a representation of the storage device illustrated in Figure 4 connected to a host computer;
Figure 6 is a block diagram that shows the construction of the apparatus illustrated in Figure 5;
Figure 7 is a block diagram of the storage device controller illustrated in Figure 6;
Figure 8 is a detail representation of a portion of the recording media illustrated in Figure 3;
Figure 9 is a flow diagram that illustrates the processing steps performed in recording user-defined data in the supplemental storage area illustrated in Figure 8;
Figure 10 is a flow diagram that illustrates the processing steps performed in retrieving user-defined data from the supplemental storage area illustrated in Figure 8.

### DESCRIPTION OF THE PREFERRED EMBODIMENT

### Storage Media

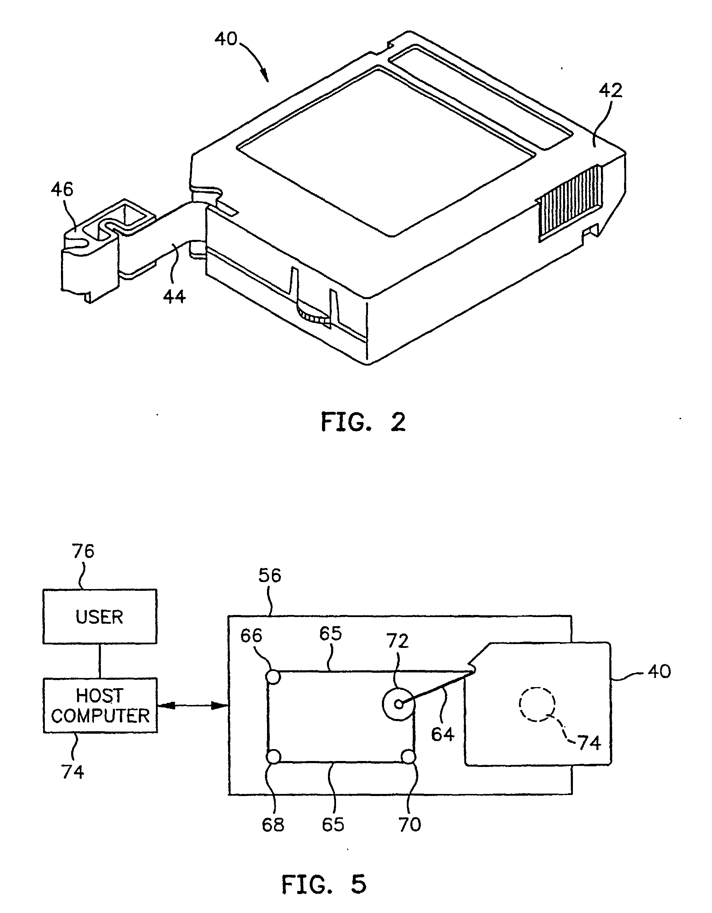

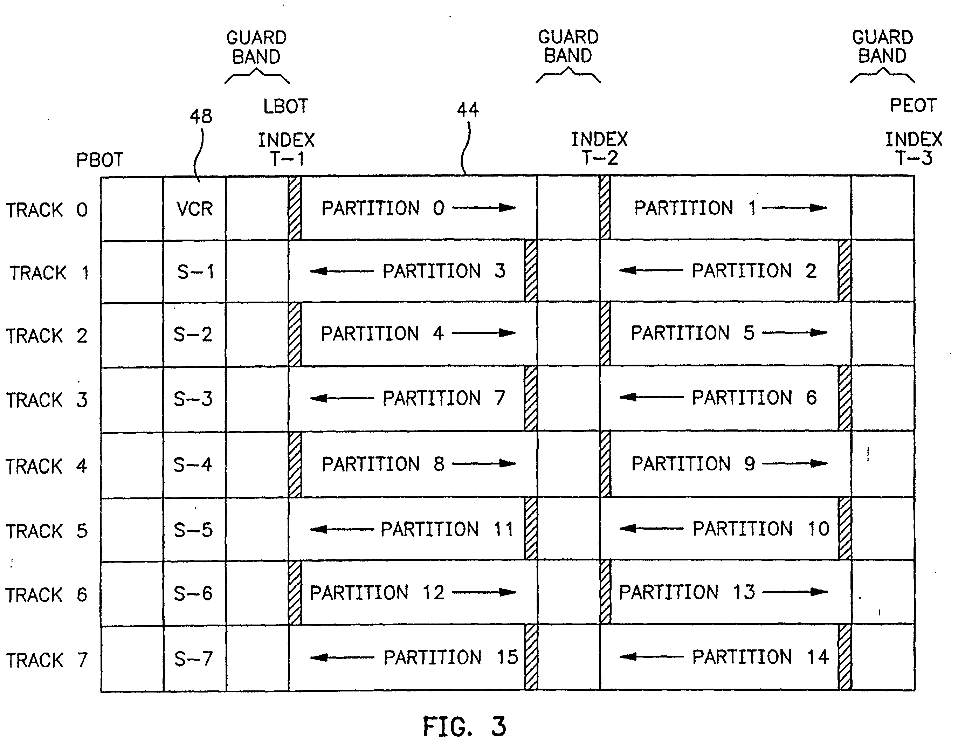

Figure 2 shows a data cartridge 40 constructed in accordance with the present invention. The data cartridge can comprise, for example, a Model 3590 tape cartridge produced by the International Business Machines Corporation (IBM Corporation) intended for use with the Model 3590 tape storage subsystem by IBM Corporation. The data cartridge 40 includes an outer shell 42 that contains a storage media comprising a single-reel tape 44 having a leader block 46 attached at one end. Figure 3 is a representation of the tape 44 that shows the data arrangement. The tape is pre-formatted with eight linear, serpentine parallel recording tracks having a plurality of equal-sized partitions for recording user data and with a protected Volume Control Region (VCR) 48 at one end of the first serpentine track, in which is stored tape format information. The logical beginning of tape (LBOT), which defines the storage area in which the user ordinarily has access, begins after a blank synchronizing area of the tape. The equal-sized tape partitions mean that the VCR thereby defines an unused area across all the remaining storage media tracks in which user data is not recorded. In accordance with the invention, user-defined data is segmented and recorded piecemeal in one or more of the unused areas. The segmentation and storage of the user-defined data is transparent to the user. In this way, the partitions are fully utilized for user data so that no recording area is wasted and the partitions remain equal-sized.

In Figure 3, the physical beginning of the tape 44 (near the leader block shown in Figure 2) is indicated by "PBOT" and the physical end of the tape is indicated by "PEOT". Thus, a reference to the "forward tape direction" will be understood to mean the direction moving from the beginning of the tape to the end of the tape. In the preferred embodiment, the tape is 0.5 inch (2.5 cm) wide, 1000 feet (300 meters) long, and has the capacity to store approximately ten GB of un-compacted data. The eight serpentine tracks of the tape 44 are designated Track 0, Track 1, and so forth through Track 7. Arrows in the partitions indicate the direction of data recording. Beginning of partition markers are indicated in Figure 3 by diagonally striped bars in each track. The partitions are numbered consecutively in the serpentine path, beginning with the first partition of Track 0, which is labelled Partition 0, and ending with the last partition of Track 7, labelled Partition 15. It should be understood that the number of partitions on a tape cartridge can be much greater than the sixteen partitions shown in Figure 3 or can be fewer, as desired. Likewise, the number of serpentine tracks can be greater or fewer than the eight tracks shown.

The first otherwise unused, supplemental storage area in Track 1 of the tape 44 that contains user-defined data is labelled in Figure 3 as "S-1" to indicate that it comprises a first segmentation of the user-defined data. The second otherwise unused, supplemental storage area in Track 2 of the tape is labelled in Figure 3 as "S-2" to indicate that it comprises a second segmentation of the user-defined data. The remaining supplemental storage areas in succeeding tracks are likewise indicated as S-3, S-4, ..., through S-7, respectively.

A blank synchronizing interval precedes and follows the VCR in the first serpentine track of the tape 44, after the PBOT. In the preferred embodiment, the VCR contains tape format information, statistical error information relating to read/write operations previously performed on the tape, and a device block map that indicates tape cartridge status. The exact contents of the VCR (and therefore its size) depend on the tape storage subsystem with which the data cartridge 40 is being used. Guard band regions that include partition markers and blank synchronizing areas are provided between partitions of the serpentine tracks.

### Data Storage Subsystem

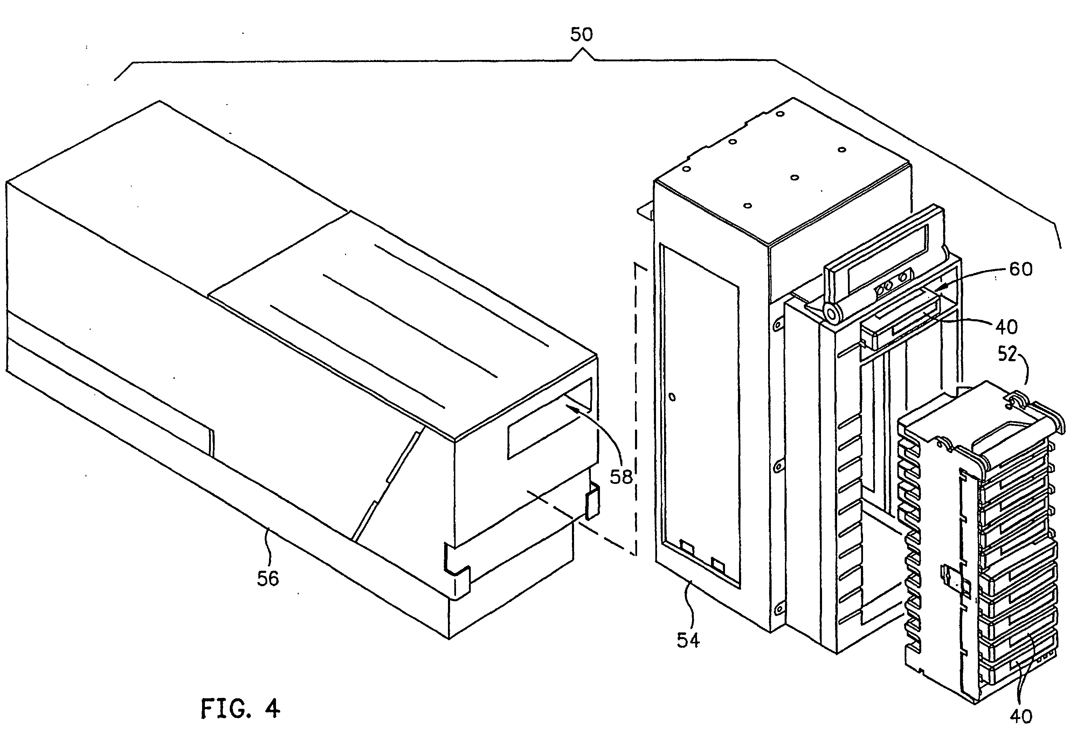

Figure 4 shows an automatic cartridge feeder subsystem 50 that is used with the data cartridge 40. In Figure 4, multiple cartridges have been placed in a cartridge magazine 52 for mating with a loader unit 54, which is attached to a drive unit 56. The drive unit may comprise, for example, the aforementioned Model 3590 unit from IBM Corporation, and contains a tape transport mechanism and read/write heads. The loader unit physically transfers cartridges to the drive unit and can accept cartridges from the magazine 52, from an automated library, from direct insertion by a user, or from other suitable cartridge storage facilities. When the magazine 52 is mated with the automatic cartridge loader 54, cartridges are removed from the magazine, transported to a receiving port 58 of the drive unit, and processed. After processing, the cartridges are returned to the magazine. At any time during such operations, a cartridge can be manually inserted into a priority slot 60 and transported to the drive unit 56 for processing.

### Tape Drive Unit and Tape Path

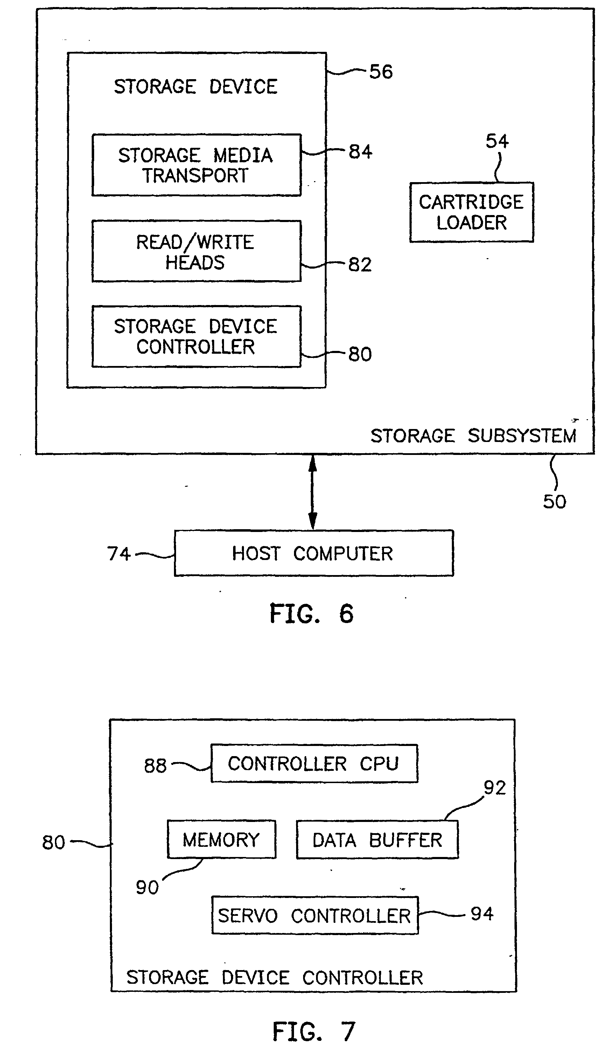

Figure 5 shows the drive unit 56 with a top panel removed to reveal a tape cartridge 40 inserted into the drive unit for processing. In the preferred embodiment of the Model 3590, a loading arm 64 pulls the tape leader block 46 (Figure 2) out from the cartridge and threads it through a tape path 65 that winds around several pinions 66, 68, 70 before coupling the leader block to a take-up reel 72 of the drive unit. Thus, the recording tape media is wound around a supply reel 74 of the data cartridge 40 and is advanced onto the take-up reel 72 of the tape drive 56. User data is stored and retrieved between the tape drive and a host computer 74, through which a user 76 provides storage and retrieval commands.

### Storage Subsystem Components

Figure 6 is a block diagram of the storage subsystem 50 showing its connection to the host computer 74. The tape drive unit 56 comprises a storage device that includes a controller 80, read and write heads 82 that read, record, and erase data from the storage media, and a storage media transport 84, which moves the storage media relative to the heads. The optional cartridge loader 54 completes the storage subsystem.

Figure 7 is a block diagram of the storage device controller 80 illustrated in Figure 6. The controller 80 includes a central processing unit (CPU) 88, such as the "i960" microprocessor available from Intel Corporation, Santa Clara, California. The controller also includes a high-speed, random access memory 90, a data buffer 92, and a servo controller 94 for maintaining the position of the read/write/erase heads over the user data tracks. As noted above, the preferred embodiment includes sixteen data tracks within each serpentine track. Thus, the tape 44 includes servo information recorded for maintaining the head position over a desired one of the data tracks. The data buffer 92 can be used to temporarily store user data, such as the user-defined data to be stored in the supplemental storage area.

### Tape Format Details

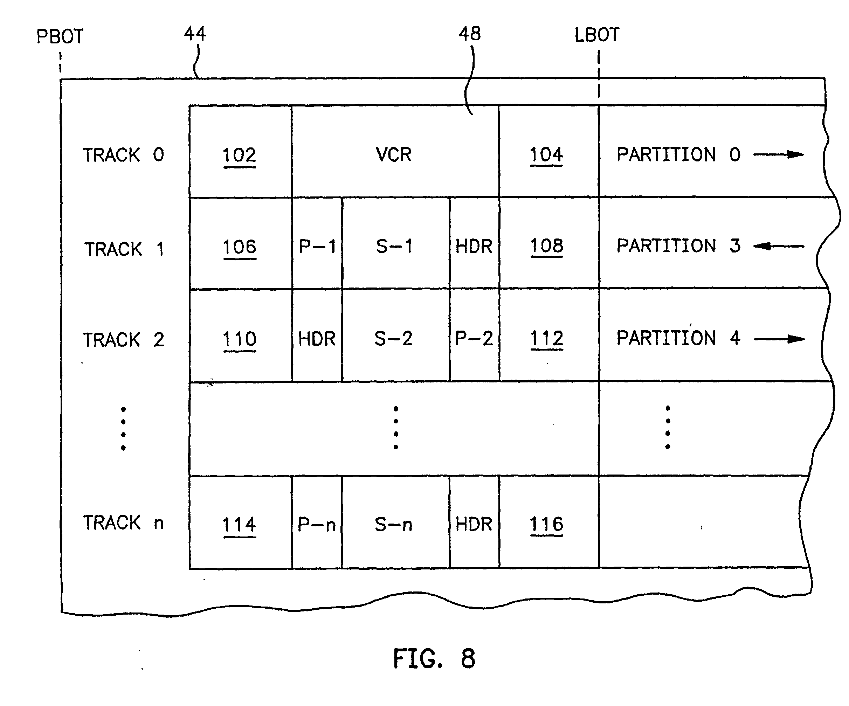

Figure 8 shows details of the supplemental data storage area at the physical beginning of the tape. The VCR area 48 is shown in Track 0 following the blank synchronization interval 102, some distance after the indicated PBOT. The VCR area is followed by another blank synchronization interval 104 before the LBOT, which is followed by the first data partition, labelled Partition 0. A blank synchronization interval 106 in the next adjacent parallel track, Track 1, is adjacent an unused area having a length substantially equal to that of the VCR area 48. The unused area is followed in the tape advance direction by another blank synchronization interval 108 before the LBOT. Because the tape 44 is formatted in a serpentine path, the LBOT for Track 1 marks the end of Partition 3. Conventionally, the unused area between the blank intervals 106, 108 in Track 1 are not accessible to the user. In accordance with the invention, however, the user can store and retrieve data from this otherwise unused area.

The unused area between the blank intervals 106, 108 will typically be used for storing information on the user data stored in the remainder of the tape. Such information might comprise, for example, a table of contents for the tape volume and will typically be accessed by the tape drive controller when the cartridge is initially loaded, after first reading the VCR information. In the preferred embodiment, the user-defined data is recorded in alternate tape directions, track by track. In this way, after reading (or writing) data in one track, the tape will be in substantially the correct position for reading (or writing) data in the next rack, following head shifting. Alternatively, the user-defined data could be recorded in the same tape direction as the VCR information. In such a scheme, even though the user data in Partition 3 of Track 1 is recorded in the tape rewind direction, the user-defined data in the unused area of Track 1 preferably is recorded in the tape advance direction, the same direction in which the VCR information is recorded.

The unused area in Track 1 is shown recorded in the same tape direction as Partition 3 with a beginning-of-data or header (HDR) mark, followed by user-defined data indicated as S-1, followed by a pointer P-1. After being transduced by the read heads, the HDR mark is recognized by the storage device controller illustrated in Figure 7 as indicating that a data field in the unused area follows. Any user-defined data in the S-1 area can then be recognized by the controller, or can be recorded by the controller into the area. The pointer P-1 points to the unused area of the next parallel track, as described further below. Preferably, the user is provided with one or more tape drive instructions that command the storage device controller to accept user-defined data and store it into the unused area. Corresponding instructions retrieve such data from the unused area. Such instructions can be provided, for example, in the C programming language or other special instruction sets recognizable by the controller. The user-defined data can comprise data generated by a user application program or can be any other user data that the user desires to store into the unused area.

The next parallel track of the tape 44, Track 2, is shown with a blank synchronization interval 110 followed in the tape advance direction by an unused area having a length substantially equal to that of the VCR area 48. The unused area is followed by another blank synchronization interval 112 before the LBOT position. Because the tape 44 is formatted in a serpentine path, the LBOT for Track 2 marks the beginning of Partition 4. The unused area between the blank intervals 110, 112 in Track 2 are accessible to the user for storing data. The unused area is shown with a header (HDR) mark, followed by user-defined data indicated as S-2, followed by a pointer P-2. Again, the HDR mark is recognized by the storage device controller illustrated in Figure 7 as indicating that a field for user-defined data follows in the unused area.

The supplemental storage areas of successive tracks are linked in similar fashion by respective pointers. Thus, for Track n, a supplemental storage area for Track n (labelled S-n) is located between two blank synchronization intervals 114, 116. In this way, the storage device controller records user-defined data into the unused areas of the parallel serpentine tracks. The last pointer, P-n, is used in the case of Track n being adjacent to a Track n+1. Those skilled in the art will appreciate that at the end of the user-defined data, the controller writes an end-of-data (EOD) marker. Thus, it is to be understood that the last parallel track of the tape would not require a pointer. Therefore, in the example having eight serpentine tracks, Track 7 would not require a P-7 field.

### Storing and Retrieving User-Defined Data

The process of storing and retrieving data from the otherwise unused, supplemental storage areas in each of the serpentine tracks is transparent to the user. That is, the user is not aware of the supplemental storage areas as comprising discontinuous blocks of recording media. In the case of eight serpentine tracks, the area comprises seven discontinuous storage media areas. when the user provides data to the storage device controller for storing into the supplemental storage areas, the controller automatically segments the data into portions that fit into the respective areas, without participation from the user.

In the preferred embodiment, the storage device controller segments the user data as the data is recorded into the unused areas. More particularly, the storage device controller receives user-defined data and stores it temporarily into the data buffer illustrated in Figure 7. The controller retrieves a sufficient amount of the data and records it into the first unused area S-1. If the user-defined data fits completely into the first area S-1, then the controller writes an end-of-data (EOD) marker at the end of the user-defined data in the S-1 area and completes its processing. If the user-defined data does not fit completely into the S-1 area, then the storage device controller fills the S-1 area and then writes the pointer P-1 so that upon later reading the data in the S-1 area the controller will recognize that further data is to be found in the unused area of the next parallel track, Track 2, and will then command the read heads to transduce the data recorded therein. After writing the pointer P-1, the controller records more user-defined data into the Track 2 area S-2.

Next, if the remainder of the user-defined data does not fit completely within the Track 2 unused area S-2, the storage device controller writes a pointer P-2 so that upon later reading the data in the S-2 area the controller will recognize that further data is to be found in the unused area of the next parallel track, Track 3, and will then command the read heads to transduce the data recorded therein. After writing the pointer P-2, the controller records more user-defined data into the Track 3 area S-3. The storage device controller repeats this process, retrieving user-defined data from the storage buffer, segmenting it on the fly, and recording it piecemeal into the unused areas of the parallel serpentine tracks, until the user-defined data is completely recorded. At the end of the user-defined data, shown in Figure 8 as Track n, the controller writes an end-of-data (EOD) marker.

Upon reading data from the supplemental storage areas, the storage device controller reverses the process. That is, the controller reads data from the first supplemental storage area S-1. If an EOD marker is encountered, the controller completes the reading process. If a pointer P-1 is encountered, then the controller moves the read heads to the next track and reads data from the supplemental storage area of that track, repeating the process until the EOD is reached.

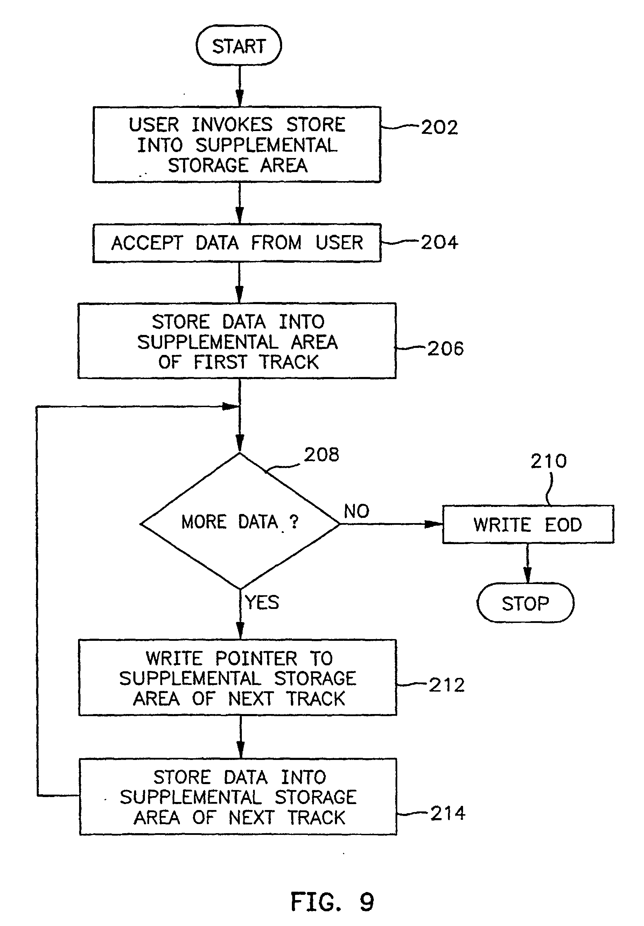

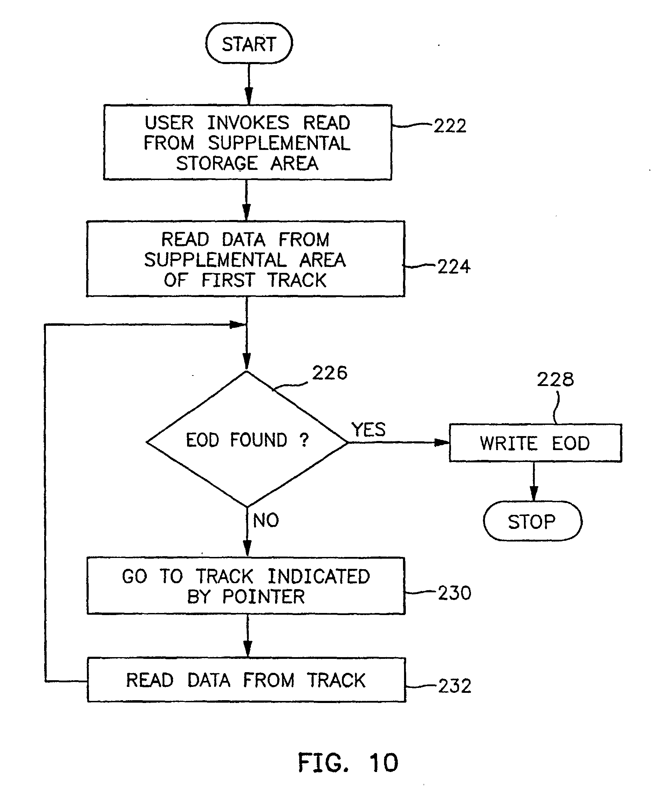

The storage media and storage device controller constructed in accordance with the present invention will be more completely understood with reference to the flow diagrams of Figure 9 and Figure 10, which illustrate the operating steps followed by the controller shown in Figure 7 in writing data and reading data, respectively, from the supplemental storage area.

The process of recording user-defined data into the supplemental storage area is initiated when a user invokes a predetermined storage subsystem command to store data. This user action is represented in Figure 9 by the flow diagram box numbered 202. Preferably, the storage device controller checks the amount of data received from the user for recording into the supplemental storage area and indicates an error condition if the data exceeds the capacity of the area. Such an error condition should not occur frequently, however, as the supplemental storage area of the preferred embodiment approximately duplicates the capacity of the VCR area in each of the subsequent parallel tracks. In the illustrated configuration with a VCR of approximately 10 MB and eight serpentine tracks, the supplemental storage area can provide up to 70 MB of otherwise unavailable storage. Even greater storage capacity can be obtained from the supplemental storage area if data compacting techniques are used. Thus, as represented in Figure 9 by the flow diagram box numbered 204, the storage device controller accepts the user-defined data if it can be contained within the supplemental storage area and indicates an error condition otherwise.

In the next processing step, the controller stores as much of the user-defined data as will fit into the supplemental storage area of the first serpentine track. This processing step is represented by the flow diagram box numbered 206. The controller next checks for additional data to be stored, indicated by the decision box numbered 208. If no more user-defined data is present in the storage buffer, a negative outcome at the decision box, then the end-of-data (EOD) marker is written, as indicated by the flow diagram box numbered 210, and the write processing stops. If additional data is present, an affirmative outcome, then the storage device controller writes a pointer to the next parallel track. This processing step is represented by the flow diagram box numbered 212. In the next processing step, represented by the flow diagram box numbered 214, the controller records additional user-defined data into the supplemental storage area of the pointed-to track. Processing then returns to the flow diagram box numbered 208, where the controller checks for more data in the data buffer.

Reading data from the supplemental storage area proceeds in a similar fashion and, as with writing data, the assembling of data from the separate segments is transparent to the user. The processing steps followed in reading the data are illustrated in the flow diagram of Figure 10. Reading is initiated by the user with invocation of a storage device supplemental storage read command, represented in Figure 10 by the flow diagram box numbered 222. In response, the storage device controller reads data from the supplemental storage area of the first track. This step is represented by the flow diagram box numbered 224. Next, at the decision box numbered 226, the controller checks to determine if an end-of-data (EOD) marker was encountered. If the EOD was found, an affirmative outcome, then the controller provides the reconstituted data to the user, as represented by the flow diagram box numbered 228.

If no EOD marker was encountered at the read, a negative outcome at the decision box numbered 226, then the controller responds by moving the read heads to the track indicated by the pointer at the end of the supplemental storage region in the preceding track. This processing step is represented in Figure 10 by the flow diagram box numbered 230. In the flow diagram box numbered 232, the controller reads the data stored in the supplemental storage area of the pointed-to track. Processing then resumes at the decision box numbered 226, where the controller again checks for the EOD marker. Reading from the supplemental storage areas proceed in this manner, track by track, until the EOD marker has been encountered, at which time the data is provided to the user.

In this way, the present invention permits otherwise unused storage media space to be transformed into supplemental storage area that can be utilized by a user for storing data outside of the storage partitions, thereby preserving equal-sized partitions and providing convenient access to additional storage.

The present invention has been described above in terms of a presently preferred embodiment so that an understanding of the present invention can be conveyed. There are, however, many configurations for storage media not specifically described herein but with which the present invention is applicable. The present invention should therefore not be seen as limited to the particular embodiment described herein, but rather, it should be understood that the present invention has wide applicability with respect to storage media generally. For example, the present invention can be applied to capacitive and optical transition sensing storage systems.

## Claims

1. A method of recording user-defined data on a storage media (44) having a plurality of parallel tracks comprising multiple data partitions in which user data is recorded and media format information (48) in an initial parallel track wherein the media format information is protected from user access, **characterised in that** the method comprises the steps of:
receiving (204) user-defined data for storage on the storage media outside of the data partitions; and
recording (206,214) the user-defined data in one or more supplemental storage areas of one or more subsequent parallel tracks, the supplemental storage areas being defined by the media format information of the initial parallel track.

2. A method as defined in claim 1, wherein the step of recording includes writing a pointer at the end of a user-defined data segment to the next succeeding parallel track, if the user-defined data could not be completely contained within a supplemental storage area of a single parallel track.

3. A storage device controller that records user data in a plurality of parallel tracks of a storage media (44) having multiple data partitions in which user data is stored, and that stores media format information (48) in an initial parallel track of the storage media such that the media format information is protected from user access, **characterised in that** the storage device controller comprises:
means for receiving user-defined data for storage on the storage media outside of the data partitions; and
means for recording the user-defined data in one or more supplemental storage areas of one or more subsequent parallel tracks of the storage media, the supplemental storage areas being defined by the media format information of the initial parallel track.

4. A storage device controller as defined in claim 3, wherein the storage device controller records the user-defined data by writing a pointer at the end of a data segment of the user-defined data to the next succeeding parallel track, if the user-defined data could not be completely contained within a supplemental storage area of a single parallel track.

## Patentansprüche

1. Verfahren zum Aufzeichnen von benutzerdefinierten Daten in einem Speichermedium (44) mit einer Vielzahl von parallelen Spuren, das mehrere Datenpartitionen, in denen Benutzerdaten aufgezeichnet werden, und Mediumformatdaten (48) in einer anfänglichen parallelen Spur umfasst, wobei die Mediumformatdaten vor einem Benutzerzugriff geschützt werden, **dadurch gekennzeichnet, dass** das Verfahren die folgenden Schritte umfasst:
Empfangen (204) von benutzerdefinierten Daten zur Speicherung im Speichermedium außerhalb der Datenpartitionen; und
Aufzeichnen (206, 214) der benutzerdefinierten Daten in einem oder mehreren zusätzlichen Speicherbereichen von einer oder mehreren nachfolgenden parallelen Spuren, wobei die zusätzlichen Speicherbereiche durch die Mediumformatdaten der anfänglichen parallelen Spur definiert werden.

2. Verfahren nach Anspruch 1, wobei der Schritt des Aufzeichnens das Schreiben eines Zeigers am Ende eines benutzerdefinierten Datensegmentes auf die nächstfolgende parallele Spur beinhaltet, falls die benutzerdefinierten Daten nicht vollständig in einem zusätzlichen Speicherbereich einer einzigen parallelen Spur aufgenommen werden konnten.

3. Speichersteuereinheit, die Benutzerdaten in einer Vielzahl von parallelen Spuren eines Speichermediums (44) mit mehreren Datenpartitionen aufzeichnet, in denen Benutzerdaten gespeichert werden, und die Mediumformatdaten (48) in einer anfänglichen parallelen Spur des Speichermediums so speichert, dass diese vor einem Benutzerzugriff geschützt sind, **dadurch gekennzeichnet, dass** die Speichersteuereinheit Folgendes umfasst
Mittel zum Empfangen von benutzerdefinierten Daten zur Speicherung im Speichermedium außerhalb der Datenpartitionen; und
Mittel zum Aufzeichnen der benutzerdefinierten Daten in einem oder mehreren zusätzlichen Speicherbereichen von einer oder mehreren nachfolgenden parallelen Spuren des Speichermediums, wobei die zusätzlichen Speicherbereiche durch die Mediumformatdaten der anfänglichen parallelen Spur definiert werden.

4. Speichersteuereinheit nach Anspruch 3, wobei die Speichersteuereinheit die benutzerdefinierten Daten aufzeichnet, indem sie einen Zeiger am Ende eines Datensegmentes der benutzerdefinierten Daten auf die nächstfolgende parallele Spur schreibt, falls die benutzerdefinierten Daten nicht vollständig in einem zusätzlichen Speicherbereich einer einzigen parallelen Spur aufgenommen werden konnten.

## Revendications

1. Procédé pour enregistrer des données définies par l'utilisateur sur un support de stockage (44) comportant une pluralité de pistes parallèles comprenant de multiples partitions de données dans lesquelles sont enregistrées des données d'utilisateur et, des données relatives au format du support (48) dans une piste parallèle initiale où les données relatives au format du support sont protégées contre les accès par l'utilisateur, **caractérisé en ce que** le procédé comprend les phases qui consistent à :
recevoir (204) des données définies par utilisateur à stocker sur le support de stockage de données en dehors des partitions de données ; et
enregistrer (206, 214) les données définies par l'utilisateur dans une ou plusieurs zones de stockage supplémentaires d'une ou plusieurs pistes parallèles suivantes, les zones de stockage supplémentaires étant définies par les données relatives au format du support sur la piste parallèle initiale.

2. Procédé selon la revendication 1, où la phase d'enregistrement comprend l'écriture d'un pointeur à la fin d'un segment de données définies par l'utilisateur, le pointeur désignant la prochaine piste parallèle qui suit, si les données définies par l'utilisation ne peuvent tenir en entier dans une zone de stockage supplémentaire d'une seule piste parallèle.

3. Contrôleur de dispositif de stockage qui enregistre des données d'utilisateur dans une pluralité de pistes parallèles d'un support de stockage (44) comportant de multiples partitions de données dans lesquelles sont enregistrées des données d'utilisateur, et qui enregistre des données relatives au format du support (48) dans une piste parallèle initiale du support de stockage de telle sorte que les données relatives au format du support sont protégées contre les accès par l'utilisateur, **caractérisé en ce que** le contrôleur de dispositif de stockage comprend :
un moyen pour recevoir des données définies par utilisateur à stocker sur le support de stockage de données en dehors des partitions de données ; et
un moyen pour enregistrer les données définies par l'utilisateur dans une ou plusieurs zones de stockage supplémentaires d'une ou plusieurs pistes parallèles suivantes du support de stockage, les zones de stockage supplémentaires étant définies par les données relatives au format du support sur la piste parallèle initiale.

4. Contrôleur de dispositif de stockage selon la revendication 3, où le contrôleur de dispositif de stockage enregistre les données définies par l'utilisateur en écrivant un pointeur à la fin d'un segment des données définies par l'utilisateur désignant la prochaine piste parallèle qui suit, si les données définies par l'utilisation ne peuvent tenir en entier dans une zone de stockage supplémentaire d'une seule piste parallèle.
